# EUROPEAN PATENT SPECIFICATION

(11) **EP 0 624 455 B1**
(45) Date of publication and mention of the grant of the patent: **16.08.2000**
(21) Application number: 94303418.1
(22) Date of filing: 12.05.1994
(51) Int. Cl.: B29D 7/01, B29C 61/00, E04H 12/22, B65D 81/28

(54) **Flexible synthetic plastic sheeting**
Biegbare Kunststoffolie
Film plastique flexible

(30) Priority: 14.05.1993 ZA 933382
(43) Date of publication of application: 17.11.1994
(73) Proprietor: Biotechnology Intellectual Property N.V., Willemstad, Curaçao (AN)
(72) Inventor: Baecker, Albin Alexander Wladyslaw, Westville, Natal Province (ZA); Hose, Richard c/o Baecker, A. A. W., Westville, Natal Province (ZA)
(74) Representative: Gaunt, Robert John

(56) References cited:
- EP-A- 0 101 102
- EP-A- 0 345 955
- US-A- 5 035 886
- DATABASE WPI Week 8524, Derwent Publications Ltd., London, GB; AN 85-144066 & JP-A-60 078 903 (SAITI YAKUKAGAKU) 4 May 1985

## Description

This invention relates to a synthetic plastic sleeve formed of a synthetic plastic sheeting.

Synthetic plastic sheeting has a wide application within the packaging industry, as well as in various other industries and applications, where it is used for covering and/or protecting different articles, objects, and other subject matter. Many of the applications of synthetic plastic sheeting are associated with subject matter that is exposed to bio-deterioration as a result of the growth of different micro-organisms and where the subject matter has to be treated with or exposed to, for example, biocides, in order to inhibit the growth of micro-organisms. Many different biocides are known for the purpose, biocides being provided in the form of liquids, pastes, powders, solids, and other forms, in order to facilitate the treatment of subject matter and/or the exposure of subject matter thereto.

When subject matter that is exposed to bio-deterioration is required to be packaged within, covered by, or protected by synthetic plastic sheeting, the treatment with or exposure to suitable biocides constitute separate and time consuming operations. As such, it is an object of this invention to at least alleviate this problem and to provide for required biocide treatment an/or biocide exposure to be facilitated.

According to the invention there is provided a synthetic plastic sleeve formed of a synthetic plastic sheeting which comprises a liquid impervious, non-biodegradable flexible synthetic plastic film of material which has a dry-film biocide for inhibiting the growth of microorganisms that cause bio-deterioration incorporated therein the sleeve being dimensioned to fit onto a predetermined diameter timber pole for covering a desired area thereof and having shrinkage properties to permit secure location of the sleeve on the timber pole by being shrunk onto the pole through heating.

The product of this invention is thus provided in the form of a liquid impervious, non bio-degradable elongated sleeve that can be fitted onto a timber pole to be supported in the ground for covering a desired area of the pole, i.e. the area of the pole that is exposed to sub-soil decay caused by a range of common and widespread fungi which inhabit the ground.

Elongated sleeves provided for the purpose may have predetermined dimensions and shrinkage properties, permitting the sleeves to be fitted onto poles having predetermined diameters and to be securely located by being shrunk onto the poles by heating.

The synthetic plastic film forming the sleeve and having the biocide incorporated therein may be extruded, having the biocide incorporated into the plastic material of which the film is formed, prior to the extrusion thereof.

Furthermore, the synthetic plastic material of which the film is formed may be provided in granular form and the biocide may be incorporated therein in a powder or liquid form prior to extrusion of the synthetic plastic film.

Still furthermore, the synthetic plastic material of which the film forming the sleeve is formed may be one of low density polyethylene, linear low density polyethylene, polyvinyl chloride, cross linked polyethylene, and the like.

The biocide incorporated in the material of the synthetic plastic film forming the sleeve is a dry-film biocide. As such, the biocide may include urea derivatives, isothiazolinone and glycols. One known biocide of this type is the biocide known in the trade as MYCAVOID DFP.

The sleeve of the invention can thus form a physical barrier in the form of a liquid impervious non-bio-degradable layer of material over a predetermined region of a timber pole where sub-soil decay of the pole can be prevented, or at least reduced, the biocide content of the sheeting enhancing the qualities of the material used for this purpose. Clearly, the specific synthetic plastic material used may be variable.

The regions of poles to be protected may be determined by specific applications of the poles, as well as the soil characteristics of the soil in which poles are to be supported. Furthermore, the synthetic plastic material qualities required for the above application may be variable, as well as the specific biocide incorporated into this material.

A particular example of flexible synthetic plastic sheeting, in accordance with the invention, is described hereinafter, as well as an example of one application of this flexible synthetic plastic sheeting which is illustrated by way of the accompanying drawing, which shows schematically in side view a sleeve formed of flexible synthetic plastic sheeting, in accordance with the invention, applied onto a timber pole.

One particular example of flexible synthetic plastic sheeting, in accordance with the invention, is in the form of a low density polyethylene film incorporating therein a biocide of a type known in the trade as MYCAVOID DFP.

This biocide is a dry film biocide and includes urea derivatives, isothiazolinone and glycols, which inhibit the growth of micro-organisms That cause bio-deterioration. Furthermore, this biocide is provided in a powder form and is dispersed into granules from which the film forming the plastic sheeting is formed, typically by an extrusion process. Particularly, the powder biocide and the granules may be mixed and provided in master batches, from which sheeting can be extruded. The method of producing this synthetic plastic film therefore provides for the dispersion of the biocide in its powder form into the granules from which the film is formed in order to form master batches, following which the sheeting can be formed by a conventional extrusion process, or any other conventional plastic sheet forming process. The biocide used clearly also can be incorporated into the material for forming a plastic film while in a liquid form.

The film forming the sheeting is provided in a sleeve form that can be fitted onto a section of a timber pole that is ordinarily disposed underground in the operative configuration of the timber pole. The sleeve can thus form a physical barrier in the form of a liquid impervious, non-bio-degradable layer of material over the section of the pole, where it is anticipated that sub-soil decay is most likely to occur. The biocide content of the film forming the sleeve will thus enhance the effective inhibition of micro-organism growth that will otherwise cause bio-deterioration of the pole.

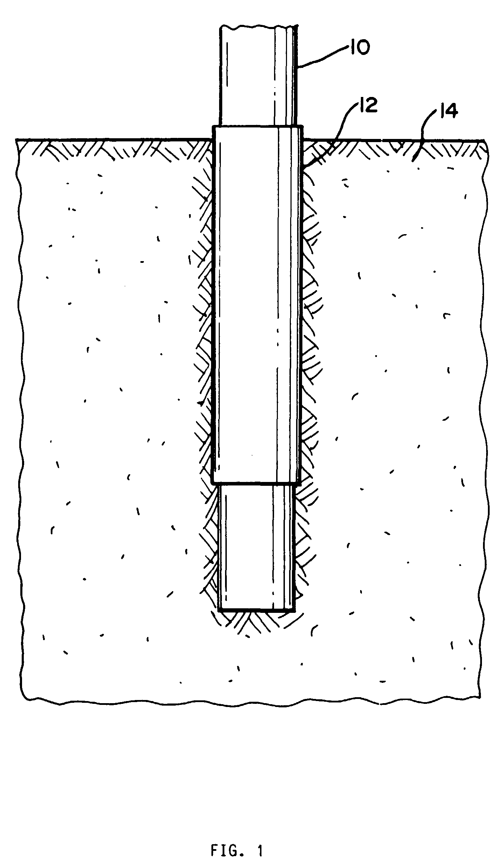

In Figure 1, there is illustrated a timber pole that has a sleeve 12 formed of a flexible synthetic plastic film forming synthetic plastic sheeting, in accordance with the invention, fitted thereon, the sleeve 12 typically being of low density polyethylene, which has predictable shrinkage qualities so that the location of the sleeve on the pole takes place by fining the sleeve over the required region of the pole and then securely locating the sleeve by heat shrinking it onto the pole.

It will be understood that the sleeve 12 fitted onto a pole 10 can cover any desired region of a pole and in the drawing shown, the sleeve 12 covers the typical region of a pole that is most exposed to bio-deterioration as a result of the growth of micro-organisms, when supported in a soil body 14.

It will be understood also that synthetic plastic sheeting, in accordance with the invention, provided in different forms also can be applied onto timber poles to effectively form a sleeve as proposed and to thereby perform the function as suggested. Once again, the specific qualities of the sleeve will be determined by the soil characteristics of soil in which poles to be protected are to be supported. As such, different synthetic plastic materials can be used for different applications. as well as different biocide compounds.

## Claims

1. A synthetic plastic sleeve formed of a synthetic plastic sheeting which comprises a liquid impervious, non-biodegradable flexible synthetic plastic film of material which has a dry-film biocide for inhibiting the growth of microorganisms that cause bio-deterioration incorporated therein, the sleeve being dimensioned to fit onto a predetermined diameter timber pole for covering a desired area thereof and having shrinkage properties to permit secure location of the sleeve on the timber pole by being shrunk onto the pole through heating.

2. A synthetic plastic sleeve as claimed in Claim 1, characterized in that the synthetic plastic film having the dry-film biocide incorporated therein is an extruded film having the dry-film biocide incorporated into the plastic material of which the film is formed, prior to the extrusion thereof.

3. A synthetic plastic sleeve as claimed in Claim 2, characterized in that the synthetic plastic material of which the film is formed is provided in granular form and the dry-film biocide is incorporated therein in a powder form prior to the extrusion of the synthetic plastic film.

4. A synthetic plastic sleeve as claimed in Claim 2, characterized in that the synthetic plastic material of which the film is formed is provided in granular form and the dry-film biocide is incorporated therein in liquid form prior to the extrusion of the synthetic plastic film.

5. A synthetic plastic sleeve as claimed in any one of Claims 1 to 4, characterized in that the synthetic plastic material of which the film forming the sleeve is formed is of one of low density polyethylene, linear low density polyethylene, polyvinyl chloride and cross-linked polyethylene.

6. A synthetic plastic sleeve as claimed in any one of Claims 1 to 5, characterized in that the dry-film biocide incorporated in the material of the synthetic plastic film forming the sleeve includes urea derivatives, isothiazolinone and glycols.

## Patentansprüche

1. Hülse aus synthetischem Kunststoff aus einer Folie aus synthetischem Kunststoff, umfassend eine für Flüssigkeiten undurchlässige, biologisch nicht abbaubare, biegsame Feinfolie aus synthetischem Kunststoff aus einem Material, das zur Inhibierung des Wachstums von Mikroorganismen ein darin eingearbeitetes, biologische Verschlechterung hervorrufendes Trockenfilm-Biozid aufweist, wobei die Hülse derart bemessen ist, daß sie auf einen Holzmast mit vorbestimmtem Durchmesser zum Abdecken einer erwünschten Fläche davon paßt und wobei sie Schrumpfeigenschaften aufweist, die eine feste Anordnung der Hülse auf dem Holzmast gestattet, indem sie durch Erhitzen auf den Mast geschrumpft wird.

2. Hülse aus synthetischem Kunststoff nach Anspruch 1, dadurch gekennzeichnet, daß die Feinfolie aus synthetischem Kunststoff, die das Trockenfilm-Biozid darin eingearbeitet aufweist, eine extrudierte Feinfolie ist, bei der das Trockenfilm-Biozid vor ihrer Extrusion in das Kunststoffmaterial, aus dem die Feinfolie gebildet ist, eingearbeitet wurde.

3. Hülse aus synthetischem Kunststoff nach Anspruch 2, dadurch gekennzeichnet, daß das synthetische Kunststoffmaterial, aus dem die Feinfolie hergestellt ist, in Granulatform bereitgestellt wird und das Trockenfilm-Biozid darin vor der Extrusion der Feinfolie aus synthetischem Kunststoff in Pulverform eingearbeitet wird.

4. Hülse aus synthetischem Kunststoff nach Anspruch 2, dadurch gekennzeichnet, daß das synthetische Kunststoffmaterial, aus dem die Feinfolie hergestellt ist, in Granulatform bereitgestellt wird und das Trockenfilm-Biozid darin vor der Extrusion der Feinfolie aus synthetischem Kunststoff in flüssiger Form eingearbeitet wird.

5. Hülse aus synthetischem Kunststoff nach einem der Ansprüche 1 bis 4, dadurch gekennzeichnet, daß das synthetische Kunststoffmaterial, aus dem die die Hülse bildende Feinfolie hergestellt ist, eines von niederdichtem Polyethylen, linearem niederdichtem Polyethylen, Polyvinylchlorid und vernetztem Polyethylen ist.

6. Hülse aus synthetischem Kunststoff nach einem der Ansprüche 1 bis 5, dadurch gekennzeichnet, daß das in das Material der die Hülse bildenden Feinfolie aus synthetischem Kunststoff eingearbeitete Trockenfilm-Biozid Harnstoffderivate, Isothiazolinon und Glycole einschließt.

## Revendications

1. Manchon en matière plastique formé d'une feuille de matière plastique qui comporte un film de matière plastique flexible imperméable aux liquides et non-biodégradable en matériau contenant un biocide sec destiné à empêcher la croissance de micro-organismes qui provoquent la bio-détérioration, étant précisé que le manchon est dimensionné pour être emboîté sur un poteau en bois d'un diamètre prédéterminé en vue de couvrir une surface souhaitée de ce poteau, et qu'il présente des propriétés de retrait pour permettre son positionnement sûr sur le poteau en bois grâce à un rétrécissement thermique sur le poteau.

2. Manchon en matière plastique selon la revendication 1, caractérisé en ce que le film de matière plastique contenant un biocide sec est un film extrudé pour lequel le biocide sec est intégré au matériau plastique qui constitue le film avant l'extrusion de celui-ci.

3. Manchon en matière plastique selon la revendication 2, caractérisé en ce que la matière plastique dont le film est formé est fournie sous une forme granulaire et le biocide sec est intégré dans cette matière sous forme de poudre avant l'extrusion du film de matière plastique.

4. Manchon en matière plastique selon la revendication 2, caractérisé en ce que la matière plastique dont le film est formé est fournie sous une forme granulaire et le biocide sec est intégré dans cette matière sous forme liquide avant l'extrusion du film de matière plastique.

5. Manchon en matière plastique selon l'une quelconque des revendications 1 à 4, caractérisé en ce que la matière plastique dont le film formant le manchon est constitué est en polyéthylène basse densité, en polyéthylène linéaire basse densité, en poly(chlorure) de vinyle ou en polyéthylène réticulé.

6. Manchon en matière plastique selon l'une quelconque des revendications 1 à 5, caractérisé en ce que le biocide sec intégré à la matière du film de matière plastique formant le manchon contient des dérivés d'urée, une isothiazolinone et des glycols.
